# EUROPÄISCHE PATENTSCHRIFT

(11) **EP 3 251 202 B1**
(45) Veröffentlichungstag und Bekanntmachung des Hinweises auf die Patenterteilung: **20.03.2019**
(21) Anmeldenummer: 16716536.4
(22) Anmeldetag: 13.04.2016
(51) Int. Cl.: H02M 1/32, H02M 1/088

(54) **UMRICHTER MIT KURZSCHLUSSUNTERBRECHUNG IN EINER HALBBRÜCKE**
CONVERTER HAVING SHORT-CIRCUIT INTERRUPTION IN A HALF-BRIDGE
CONVERTISSEUR À COUPURE PAR COURT-CIRCUIT EN UN DEMI-PONT

(30) Priorität: 21.04.2015 DE 102015207187
(43) Veröffentlichungstag der Anmeldung: 06.12.2017
(73) Patentinhaber: Siemens Aktiengesellschaft, 80333 München (DE)
(72) Erfinder: LUTZE, Marcel, 90459 Nürnberg (DE)
(86) Internationale Anmeldenummer: PCT/EP2016/058045
(87) Internationale Veröffentlichungsnummer: WO 2016/169817

(56) Entgegenhaltungen:
- WO-A1-2015/090735
- WO-A1-2016/005166
- DE-A1- 4 435 255

## Beschreibung

Die Erfindung betrifft ein Verfahren zum Steuern eines Umrichters, der eine Halbbrücke aufweist, über welche ein Zwischenkreis mit einem Wechselspannungs-Phasenleiter verschaltet ist. Zu der Erfindung gehört auch ein Umrichter, der gemäß dem Verfahren gesteuert werden kann. Schließlich gehört zu der Erfindung auch ein Flugzeug mit dem erfindungsgemäßen Umrichter.

Mittels eines Umrichters kann eine Wechselspannung mit vorgegebener Frequenz in eine Wechselspannung mit einstellbarer Frequenz umgewandelt werden. Hierzu wird die vorgegebene Wechselspannung mittels eines Gleichrichters in eine Gleichspannung gewandelt, die in einem Zwischenkreis bereitgestellt wird. Ausgehend vom Zwischenkreis kann mittels eines Wechselrichters die Wechselspannung mit einstellbarer Frequenz erzeugt werden. Die beiden Wechselspannungen können jeweils mehrphasig bereitgestellt werden, also beispielsweise als dreiphasiges Drehstromsystem.

Über den Umrichter können beispielsweise ein elektrischer Generator und ein elektrischer Antriebsmotor gekoppelt sein. Eine solche Anwendung ist beispielsweise in einem Flugzeug mit elektrischem Propellerantrieb möglich. Ein Verbrennungsmotor treibt hierbei den Generator an, dessen Wechselspannung über den Umrichter in eine Wechselspannung für den elektrischen Antriebsmotor gewandelt wird. Der Antriebsmotor treibt den Propeller des Flugzeugs an.

Der Umrichter zum Betreiben des Antriebsmotors für den Propeller eines Flugzeugs sollte möglichst ausfallsicher sein. Auch weitere sicherheitsrelevante Geräte benötigen einen ausfallsicheren Umrichter.

Ein Fehlerfall sieht wie folgt aus. In einem Umrichter kann der Zwischenkreis durch eine Halbbrücke mit jeweils einem Wechselspannungs-Phasenleiter verschaltet sein. Eine solche Halbbrücke kann Bestandteil des Gleichrichters oder des Wechselrichters sein. Ein möglicher Fehlerfall beim Betrieb des Umrichters ist, dass ein Halbleiterschalter der Halbbrücke dauerhaft elektrisch leitend wird, also nicht mehr durch ein Steuersignal in einen elektrisch sperrenden oder nichtleitenden Zustand geschaltet werden kann. Dann ist die Plusleitung oder die Minusleitung dauerhaft mit dem Wechselspannungs-Phasenleiter kurzgeschlossen. Dies erfordert in der Regel eine Unterbrechung des Betriebs und eine Reparatur, beispielsweise das Austauschen der Halbbrücke. Bei einem Flugzeug ist dies während des Fluges nicht möglich. Andere sicherheitsrelevante Anwendungen können ebenfalls erfordern, dass zunächst der Weiterbetrieb des Umrichters auch mit defektem Halbleiterschalter möglich sein muss.

Aus der DE 44 35 255 A1 ist ein Verfahren zur Fehlerbehebung in einer Stromrichterschaltungsanordnung bekannt. Die Stromrichterschaltungsanordnung weist mehrere Schaltermodule auf, die ihrerseits aus einer Parallelschaltung von Halbleiterchips bestehen. Die Halbleiterchips sind über Anschlussdrähte, vorzugsweise Bonddrähte zusammengeschaltet. Bildet nun ein Chip aufgrund eines Defekts einen Kurzschluss, so werden die Anschlussdrähte dieses Chips durch spezielle Strompulse aufgetrennt.

Der Erfindung liegt die Aufgabe zugrunde, einen ausfallsicheren Umrichter bereitzustellen.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Die Erfindung umfasst einen Umrichter, der in der beschriebenen Weise einen Zwischenkreis zum Bereitstellen einer Gleichspannung aufweist. Des Weiteren weist der Umrichter mindestens eine Halbbrücke auf, durch welche eine Plusleitung und eine Minusleitung des Zwischenkreises jeweils mit ein und demselben Wechselspannungs-Phasenleiter verschaltet sind. Die Halbbrücke ist insbesondere in einem Wechselrichter des Umrichters angeordnet.

Um die Ausfallsicherheit zu erhöhen, ist bei dem erfindungsgemäßen Umrichter vorgesehen, dass die Plusleitung und die Minusleitung des Zwischenkreises jeweils durch die Halbbrücke nicht nur über einen einzelnen Halbleiterschalter, sondern jeweils über mehrere Halbleiterschalter mit dem Wechselspannungs-Phasenleiter verschaltet sind. Jeder Halbleiterschalter kann beispielsweise auf der Grundlage eines IGBT (insulated gate bipolar transistor) oder eines MOSFET (metal-oxide semiconductor field effect transistor) gebildet sein. Des Weiteren weist jeder Halbleiterschalter jeweils eine eigene, in Reihe zur Schaltstrecke geschaltete Schmelzsicherung auf. Mit anderen Worten ist jedem Halbleiterschalter eine jeweilige Schmelzsicherung vorgeschaltet oder nachgeschaltet. Mit anderen Worten wird die Schmelzsicherung nur von dem elektrischen Strom der Schaltstrecke durchflossen. Die Schaltstrecke ist bei den oben genannten Halbleiterschaltern die Drain-Source-Strecke. Eine andere Schaltstrecke ist eine Kollektor-Emitter-Strecke.

Der Umrichter weist des Weiteren eine Steuereinrichtung auf, die beispielsweise einen Mikrocontroller oder einen Mikroprozessor umfassen kann. Die Steuereinrichtung ist zum Steuern der Halbleiterschalter ausgestaltet. Hierbei ist die Steuereinrichtung dazu ausgelegt, das folgende erfindungsgemäße Verfahren durchzuführen.

Nach dem erfindungsgemäßen Verfahren wird bei dem Umrichter detektiert, ob einer der Halbleiterschalter defekt ist, sodass er dauerhaft in einem elektrisch leitenden Zustand verharrt. Mit anderen Worten kann der Halbleiterschalter nicht mehr in den elektrisch sperrenden Zustand geschaltet werden.

Ist ein defekter Halbleiterschalter detektiert, so wird schrittweise die Schmelzsicherung des defekten Halbleiterschalters aufgeschmolzen. Hierzu wird mehrmals nacheinander ein Kurzschluss zwischen der Plusleitung und der Minusleitung des Zwischenkreises erzeugt. Dies erfolgt über den defekten Halbleiterschalter und mindestens zwei weitere der Halbleiterschalter der Halbbrücke. Die Plusleitung und die Minusleitung werden dabei jeweils nur für eine Pulszeitdauer Tsoa kurzgeschlossen, die kleiner ist als eine Schmelzzeitdauer Ta, welche die Schmelzsicherung bei durchgängigem Kurzschluss zum Aufschmelzen benötigen würde. Zwischen jedem Kurzschluss wird der Kurzschlussstrom unterbrochen. Mit anderen Worten wird die Schmelzsicherung nacheinander durch Stromstöße, die jeweils durch das Kurzschließen erzeugt werden, stufenweise oder schrittweise aufgeheizt, bis sie schmilzt oder eine elektrisch isolierende Sperrstrecke ausbildet. Durch das Aufschmelzen der Schmelzsicherung wird dann schließlich ein elektrischer Strom durch den defekten Halbleiterschalter gesperrt oder verhindert.

Durch die Erfindung ergibt sich der Vorteil, dass die mindestens zwei weiteren Halbleiterschalter, über welche der Kurzschlussstrom beim Aufschmelzen der Schmelzsicherung ebenfalls geführt werden muss, schonend betrieben werden können. Es ist nicht nötig, den Kurzschlussstrom so lange durchgehend oder ununterbrochen über die mindestens zwei weiteren Halbleiterschalter zu führen, bis die Schmelzsicherung auslöst oder aufschmilzt, also für die gesamte Schmelzzeitdauer Ta. Stattdessen können zwischendurch die mindestens zwei weiteren Halbleiterschalter in den sperrenden Zustand geschaltet werden, sodass die mindestens zwei weiteren Halbleiterschalter abkühlen können oder eine Wärme im jeweiligen Halbleiterschalter verteilt werden kann. Die Pulszeitdauer Tsoa ist insbesondere kürzer oder gleich der Zeitdauer, die als sicherer Arbeitsbereich bekannt ist (SOA - safe operation area). Hierbei handelt es sich um die Zeitdauer, bis zu welcher der Halbleiterschalter im elektrisch leitenden Zustand einen Kurzschlussstrom bei gegebener Gleichspannung des Zwischenkreises führen kann, ohne selbst beschädigt zu werden. Der sichere Arbeitsbereich kann beispielsweise einem Datenblatt der Halbleiterschalter entnommen werden.

Zu der Erfindung gehören auch Weiterbildungen, durch deren Merkmale sich zusätzliche technische Vorteile ergeben.

Gemäß einer Weiterbildung ist zwischen jedem Kurzschluss eine Pulspause Tp vorgesehen, die kleiner als eine thermische Zeitkonstante der Schmelzsicherung ist. Während der Pulspause Tp fließt kein Kurzschlussstrom durch die mindestens zwei weiteren Halbleiterschalter. Indem die Pulspause Tp kurz genug ist, kühlt hierbei die Schmelzsicherung nicht zu weit ab. Mit anderen Worten kann durch mehrere Stromstöße die Schmelzsicherung erfolgreich aufgeheizt und aufgeschmolzen werden. Diese Weiterbildung beruht auf der Erkenntnis, dass die thermische Zeitkonstante einer Schmelzsicherung größer ist als diejenige eines Halbleiterschalters, insbesondere einer Sperrschicht des Halbleiterschalters, die sich zusammen mit der Schmelzsicherung beim Führen des Kurzschlussstromes aufheizt. Mit anderen Worten kühlt der Halbleiterschalter schneller ab als die Schmelzsicherung. Wenn die Pulspause Tp größer als die Zeitkonstante der Sperrschicht, aber kleiner als die Zeitkonstante der Schmelzsicherung ist, kann der mindestens eine weitere Halbleiterschalter schonend betrieben werden, während die Schmelzsicherung zum Schmelzen oder Auslösen gebracht werden kann. Die Zeitkonstante kann beispielsweise die Halbwertszeit oder die Zeit zum Abkühlen auf 1/e der Ausgangstemperatur sein, wobei e die Eulersche Konstante ist.

Gemäß einer Weiterbildung wird der defekte Halbleiterschalter mittels einer den Halbleiterschalter steuernden Treiberschaltung detektiert. Eine solche Treiberschaltung ist aus dem Stand der Technik als Gate-Treiber bekannt. Um mittels einer solchen Treiberschaltung den defekten Halbleiterschalter zu detektieren, wird gemäß der Weiterbildung eine über den defekten Halbleiterschalter abfallende elektrische Spannung mit einem Spannungssollwert verglichen. Bleibt die Spannung kleiner als der Spannungssollwert, obwohl am Steuereingang (z.B. am Gate) des Halbleiterschalters ein Steuersignal zum Sperren des Halbleiterschalters erzeugt wird, so wird ein Defekt des Halbleiterschalters signalisiert. Es kann zusätzlich oder alternativ eine über einem der weiteren Halbleiterschalter abfallende Spannung ausgewertet werden. Bei einem Kurzschluss wird hier ein vorbestimmter Sollwert überschritten.

Gemäß einer Weiterbildung wird nach dem Aufschmelzen der Schmelzsicherung ein Lichtbogen in der Schmelzsicherung mittels der mindestens zwei weiteren Halbleiterschalter unterdrückt. Hierdurch ergibt sich der Vorteil, dass der Lichtbogen aktiv gesteuert werden kann.

Eine Weiterbildung ermöglicht das Durchführen des Verfahrens während eines Betriebs des Umrichters, während also mittels des Umrichters ein elektrischer Verbraucher betrieben wird. Der defekte Halbleiterschalter wird während des Betriebs detektiert. Zum Aufschmelzen der Sicherung wird ein vorbestimmtes Pulsmuster aktiviert, mittels welchem die mindestens zwei weiteren Halbleiterschalter angesteuert werden. Während dieser Zeit kann der Verbraucher beispielsweise leerlaufen, wenn es sich beispielsweise um einen elektrischen Antriebsmotor handelt.

Gemäß einer Weiterbildung ist vorgesehen, dass der Umrichter nach dem Aufschmelzen der Schmelzsicherung mit dem defekten Halbleiterschalter weiterbetrieben wird. Hierzu werden dann die parallel geschalteten Halbleiterschalter der Halbbrücke genutzt. Hierdurch ist ein Weiterbetrieb des Umrichters möglich. Beispielsweise kann hierdurch eine sichere Landung eines Flugzeugs ermöglicht werden.

In einer Weiterbildung liegt die Pulszeitdauer Tsoa in einem Bereich von 8 Mikrosekunden bis 15 Mikrosekunden. Hierbei ergibt sich auch bei einem Kurzschlussstrom ein sicherer und/oder schonender Betrieb der Halbleiterschalter.

Der erfindungsgemäße Umrichter ist insbesondere ein 2-Level-Umrichter.

Die Erfindung umfasst auch ein Flugzeug, das insbesondere als Starrflügelflugzeug ausgestaltet ist. Das erfindungsgemäße Flugzeug weist mindestens einen elektrischen Antriebsmotor zum Antreiben eines jeweiligen Propellers des Flugzeugs auf. Ein solches Flugzeug wird auch als ePlane bezeichnet. Für den Fall, dass das Flugzeug als Drehflügler ausgestaltet ist, handelt es sich bei dem Propeller um den Rotor des Flugzeugs. Der mindestens eine Antriebsmotor des Flugzeugs ist über einen Umrichter mit einem elektrischen Generator gekoppelt. Der Umrichter ist hierbei eine Ausführungsform des erfindungsgemäßen Umrichters. Das erfindungsgemäße Flugzeug weist den Vorteil auf, dass bei einem defekten Halbleiterschalter ein sicherer Weiterflug des Flugzeugs möglich ist.

Im Folgenden ist ein Ausführungsbeispiel der Erfindung beschrieben. Hierzu zeigt:
- FIG 1: eine schematische Darstellung einer Ausführungsform des erfindungsgemäßen Umrichters;
- FIG 2: eine schematische Darstellung einer Halbbrücke des Umrichters von FIG 1;
- FIG 3: ein Diagramm mit einem schematisierten Verlauf eines Kurzschlussstroms, wie er sich in der Halbbrücke von FIG 2 beim Ausführen einer Ausführungsform des erfindungsgemäßen Verfahrens ergeben kann; und
- FIG 4: eine schematische Darstellung einer Ausführungsform des erfindungsgemäßen Flugzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

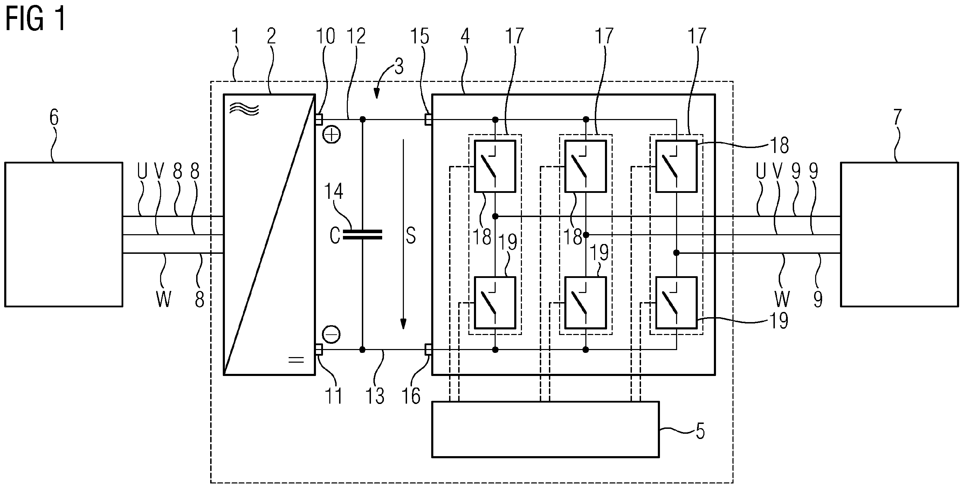

FIG 1 zeigt einen Umrichter 1, der einen Gleichrichter 2, einen Zwischenkreis 3, einen Wechselrichter 4 und eine Steuereinrichtung 5 aufweist. Über den Umrichter 1 können eine Spannungsquelle 6, beispielsweise ein elektrischer Generator, und ein elektrischer Verbraucher 7, beispielsweise ein Elektromotor, miteinander gekoppelt sein. Die Spannungsquelle 6 kann über Phasenleitungen 8 an den Gleichrichter 2 angeschlossen sein. Der Verbraucher 7 kann über Phasenleitungen 9 an den Wechselrichter 4 angeschlossen sein. Über die Phasenleitungen 8, 9 können jeweils Wechselspannungen unterschiedlicher Phasen übertragen werden. Die Phasen sind in FIG 1 durch die üblichen Phasenbezeichnungen U, V, W gekennzeichnet.

Aus den Wechselspannungen der Phasenleitungen 8 kann durch den Gleichrichter 2 eine Gleichspannung S erzeugt werden, die an einem Plusausgang 10 und einem Minusausgang 11 des Gleichrichters 2 in den Zwischenkreis 3 eingespeist wird. Der Zwischenkreis 3 kann eine Plusleitung 12, die an dem Plusausgang 10 angeschlossen ist, und eine Minusleitung 13, die an dem Minusausgang 11 angeschlossen ist, aufweisen. Die Plusleitung 12 und die Minusleitung 13 können über einen Zwischenkreiskondensator 14 gekoppelt sein, durch welchen eine Zwischenkreiskapazität C bereitgestellt ist. Die Plusleitung 12 kann an einem Plusanschluss 15 des Wechselrichters 4 angeschlossen sein. Die Minusleitung 13 kann an einem Minusanschluss 16 des Wechselrichters 4 angeschlossen sein. Die Plusleitung 12, die Minusleitung 13 und der Phasenleitungen 8,9 können jeweils beispielsweise durch einen Draht oder eine Stromschiene bereitgestellt sein.

Der Wechselrichter 4 kann Halbbrücken 17 aufweisen, von denen jede die Plusleitung 12 und die Minusleitung 13 jeweils mit einer anderen der Phasenleitungen 9 verschaltet oder verbindet. Jede Halbbrücke 17 kann hierzu zwei Schalteranordnungen 18, 19 aufweisen. Die Schalteranordnung 18 wird auch als High-Side-Schaltung, die Schalteranordnung 19 als Low-Side-Schaltung, bezeichnet. Bei jeder Halbbrücke 17 verbindet die Schalteranordnung 18 beispielhaft die Plusleitung 12 mit der jeweiligen Phasenleitung 9. Die Schalteranordnung 19 verbindet die Minusleitung 13 mit derselben Phasenleitung 9. Durch abwechselndes Schalten der Schalteranordnungen 18, 19 wird in an sich bekannter Weise aus der Gleichspannung S in dem Phasenleiter 9 eine Wechselspannung eingeprägt oder erzeugt.

Zum Steuern der Schalteranordnungen 18, 19 der Halbbrücken 17 können Steueranschlüsse der Schalteranordnungen 18, 29 mit der Steuereinrichtung 5 gekoppelt sein. Die Steuereinrichtung 5 kann ganz oder teilweise in die Schalteranordnungen 18, 19 integriert sein. Sie kann teilweise oder ganz als separate Steuereinheit bereitgestellt sein.

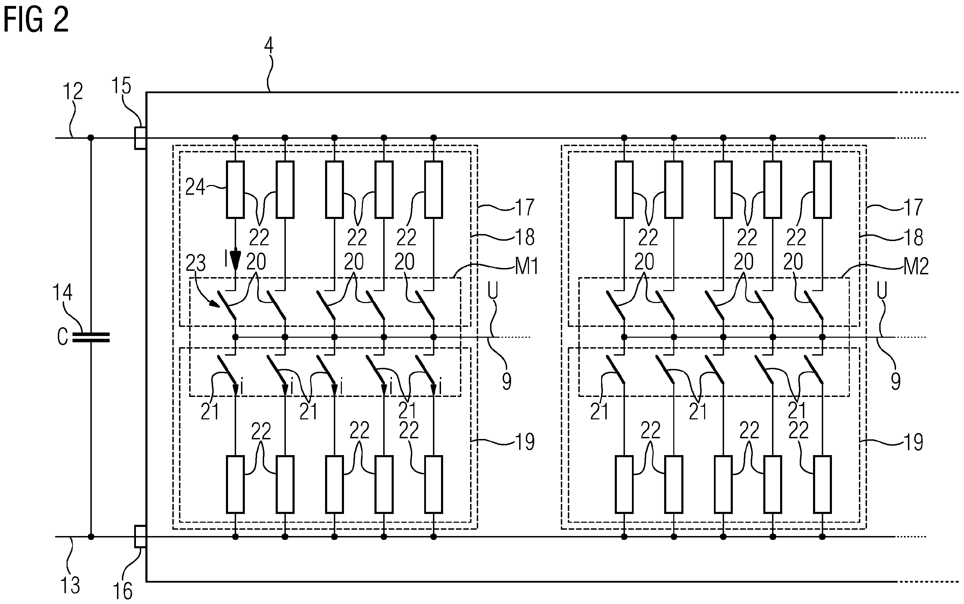

In FIG 2 ist ein Ausschnitt des Wechselrichters 4 mit mehr Details dargestellt. Bei dem Wechselrichter 4 weisen die Schalteranordnungen 18, 19 jeweils mehrere Halbleiterschalter 20, 21 auf. Zu jedem Halbleiterschalter 20, 21 ist eine eigene Schmelzsicherung 22 in Reihe geschaltet. Bei jeder Schalteranordnung 18, 19 ist also eine Parallelschaltung aus mehreren Reihenschaltungen vorgesehen, wobei jede Reihenschaltung aus einem Halbleiterschalter 20 und einer Schmelzsicherung 22 beziehungsweise einem Halbleiterschalter 21 und einer Schmelzsicherung 22 gebildet ist. Durch die Parallelschaltung ist eine Stromtragfähigkeit jeder Schalteranordnung 18, 19 größer als bei einem einzelnen Halbleiterschalter 20, 21. Jeder Halbleiterschalter 20, 21 kann beispielsweise als IGBT oder MOSFET ausgestaltet sein. Die Halbleiterschalter 20, 21 einer Halbbrücke 17 können als Halbleitermodul M1, M2 bereitgestellt sein, also beispielsweise auf einem gemeinsamen Halbleitersubstrat ausgebildet sein.

Die Schmelzsicherungen 22 können eine Auslösedauer oder Schmelzzeitdauer Ta aufweisen, die größer als eine maximal zulässige Einschaltdauer der Halbleiterschalter 20, 21 bei einem Kurzschluss ist. Die maximale Einschaltdauer Tsoa im sicheren Arbeitsbereich der Halbleiterschalter 20, 21 kann in einem Bereich von 8 Mikrosekunden bis 15 Mikrosekunden liegen. Beispielsweise kann der sichere Arbeitsbereich bei 10 Mikrosekunden liegen.

Für die weitere Erläuterung des Ausführungsbeispiels sei angenommen, dass einer der Halbleiterschalter 20 defekt sei. Er wird im Folgenden als defekter Halbleiterschalter 23 bezeichnet. Durch den Defekt ist der defekte Halbleiterschalter 23 durchgehend elektrisch leitend, das heißt in dem veranschaulichten Beispiel ist die Plusleitung 12 dauerhaft mit dem Phasenleiter 9 der Phase U elektrisch verbunden oder kurzgeschlossen.

Während des Betriebs des Umrichters 1 wandelt der Umrichter 1 die Wechselspannungen in den Phasenleitern 8 in Wechselspannungen um, die über die Phasenleiter 9 dem Verbraucher 7 zugeführt werden. Beispielsweise durch eine Treiberschaltung des defekten Halbleiterschalters 23, also einen Gate-Treiber, kann auf der Grundlage der Schalterspannung erkannt werden, dass der Halbleiterschalter 23 defekt ist. Dies kann beispielsweise der Steuereinrichtung 5 durch ein Signal signali siert werden. Alternativ dazu kann über die Schalterspannungen der nicht-defekten Halbleiterschalter ebenfalls ein dauerhaft leitender Halbleiterschalter erkannt werden, da der Kurzschlussstrom eine Spannungserhöhung bewirkt.

Die Steuereinrichtung 5 führt in Reaktion auf das Signal ein Verfahren durch, durch welches die zu dem defekten Halbleiterschalter 23 gehörende Schmelzsicherung 24 ausgelöst oder aufgeschmolzen wird, sodass durch die Schmelzsicherung 24 eine elektrische Trennung oder elektrische Isolierung bewirkt wird. Hierdurch wird dann in dem Beispiel die Plusleitung 12 von dem Phasenleiter 9 elektrisch getrennt, obwohl der defekte Halbleiterschalter 23 dauernd elektrisch leitend ist.

Bei dem Verfahren wird durch Einschalten der nicht defekten Halbleiterschalter 21, also der Halbleiterschalter in derjenigen Schalteranordnung 19, in der sich nicht der defekte Halbleiterschalter 23 befindet, der defekte Halbleiterschalter 23 über seine Sicherung 24 vom Zwischenkreis 3 getrennt. Durch Schließen der Halbleiterschalter 21, das heißt durch Schalten der Halbleiterschalter 21 in den elektrisch leitenden Zustand, wird die Plusleitung 12 mit der Minusleitung 13 über den defekten Halbleiterschalter 23 einerseits und die Halbleiterschalter 21 andererseits elektrisch kurzgeschlossen. Es fließt hierdurch ein Kurzschlussstrom I. Die übrigen Halbleiterschalter 20 der Schalteranordnung 18, in welcher sich der defekte Halbleiterschalter 23 befindet, sind in einen elektrisch sperrenden Zustand, das heißt in einem geöffneten Zustand, geschaltet. Hierdurch wird der Kurzschlussstrom I vollständig über die Schmelzsicherung 24 und den defekten Halbleiterschalter 23 geführt. In der Schalteranordnung 19 teilt sich der Kurzschlussstrom I auf die Halbleiterschalter 21 auf. Hierdurch wird verhindert, dass die Schmelzsicherungen 22 aufschmelzen oder auslösen.

Damit die nicht-defekten Halbleiterschalter 21 beim Auslösen der Schmelzsicherung 24 nicht geschädigt werden, muss der Kurzschlussstrom I innerhalb des sicheren Arbeitsbereichs Tsoa wieder abgeschaltet werden. Das heißt, der Kurzschlussstrom I wird nur für eine Pulszeitdauer Tsoa durch Schließen der Halbleiterschalter 21 erzeugt. Die Pulszeitdauer Tsoa beträgt in dem Beispiel 10 Mikrosekunden, was dem sicheren Arbeitsbereich der Halbleiterschalter 21 entspricht. Das Auslösen der Schmelzsicherung 24 an einer Gleichspannung wie der Gleichspannung S kann aber länger als die Pulszeitdauer Tsoa benötigen. Diese Schmelzzeitdauer Ta der Schmelzsicherung kann mehr als eine Millisekunde, insbesondere mehr als 5 Millisekunden, dauern. Dies ist deutlich zu lange für die Halbleiterschalter 21 mit dem sicheren Arbeitsbereich bei einer Pulszeitdauer Tsoa von beispielsweise 10 Mikrosekunden.

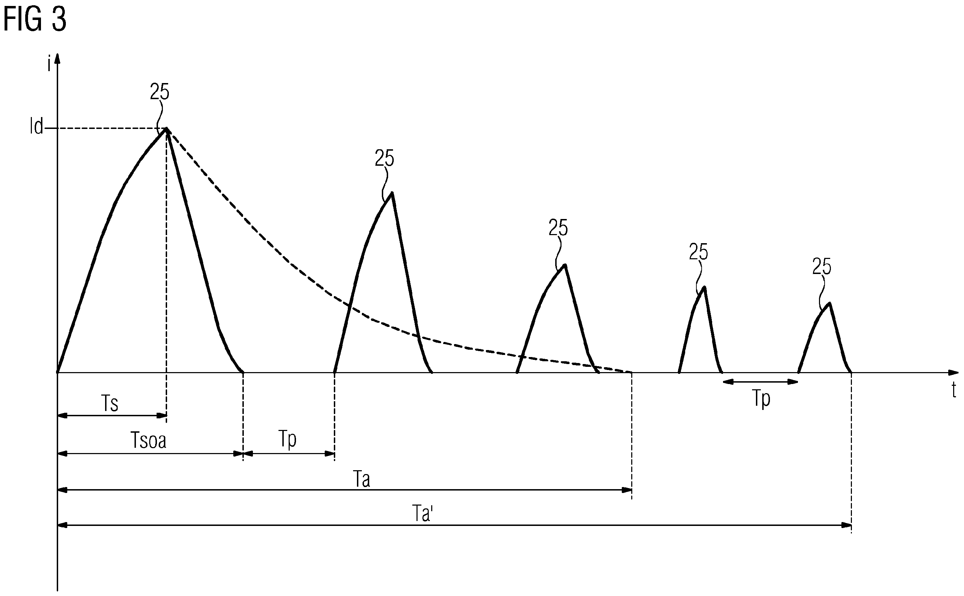

FIG 3 veranschaulicht noch einmal die zeitlichen Verhältnisse. In FIG 3 ist über der Zeit t die Stromstärke i der Teilströme durch einen der Halbleiterschalter 21 beim Durchführen des Verfahrens veranschaulicht. Der Kurzschlussstrom I teilt sich auf die Halbleiterschalter 21 auf und wird dort als Teilstrom Id geführt. Die Stromstärke des Teilstroms i ist hierbei auf den maximalen Teilstrom Id angestiegen, wie er sich bei noch unversehrter Schmelzsicherung 24 ergibt. Bei dem Beispiel ist angenommen, dass nach einer Reaktionszeit Ts das Signal von der Steuereinrichtung 5 empfangen wird, durch welches der defekte Halbleiterschalter 23 signalisiert wird. Nach Pulszeitdauer Tsoa werden die Halbleiterschalter 21 abgeschaltet oder in den sperrenden Zustand geschaltet. Zum Auslösen der Schmelzsicherung 24 wird dagegen die Schmelzzeitdauer Ta benötigt.

Zwischen jedem Schaltpuls oder Kurzschlussstrom 25 werden die Halbleiterschalter 21 für eine Pulspause Tp in den geöffneten Zustand geschaltet.

Hierdurch werden die noch funktionsfähigen Halbleiterschalter 21, die den Kurzschlussstrom I führen müssen, beim Auslösen der Schmelzsicherung 24 nicht überlastet. Die Schmelzsicherung 24 wird innerhalb von der Pulszeitdauer Tsoa durch einen hohen Kurzschlussstrom I schrittweise mit jedem Kurzschluss 25 aufgeschmolzen, wobei der Kurzschlussstrom dann nach jedem Schritt noch innerhalb des sicheren Arbeitsbereichs nach der Pulszeitdauer Tsoa abgeschaltet wird. Der normalerweise durchgeführte Abschaltvorgang ist in FIG 3 über die gestrichelte Linie eingezeichnet, die angibt, dass sich hierbei eine Schmelzdauer Ta ergeben würde, die größer als der sichere Arbeitsbereich Tsoa ist.

Da die thermische Zeitkonstante der Schmelzsicherung 24 größer ist als die der Halbleiterschalter 21, kühlt die Schmelzsicherung 24 innerhalb der Pulspause Tp nur geringfügig ab. Damit kann nach dem Anschmelzen oder teilweise Schmelzen der Schmelzsicherung 24 die Isolationsstrecke in der Schmelzsicherung 24 stückweise mit jedem Kurzschluss 25 vergrößert werden, indem der nicht-defekte Halbleiterschalter wiederholend den Kurzschlussstrom I ein- und ausschaltet. Damit verlängert sich die Ausschaltzeit, das heißt die Schmelzzeitdauer Ta, und es ergibt sich die veranschaulichte Schmelzzeitdauer Ta'. Indem hierbei die Halbleiterschalter 21 mehrmals zyklisch mit einem Kurzschluss beaufschlagt werden, sind diese schonender betrieben, als dauerhaft für die Schmelzzeitdauer Ta mit dem Kurzschlussstrom beaufschlagt zu werden.

Nach dem Aufschmelzen der Schmelzsicherung 24 kann sich ein Lichtbogen in der Schmelzsicherung 24 ausbilden, welcher sich durch Schalten der Halbleiterschalter 21 direkt beeinflussen lässt. Durch wiederholtes Einschalten der Halbleiterschalter 21 wird die Schmelzsicherung also so lange geschädigt, bis sich die Isolationsstrecke ausgebildet hat. Durch diese Vorgehensweise werden die noch aktiven Halbleiterschalter 21 auch beim Auslösen der Schmelzsicherung 24 stets in ihrem sicheren Arbeitsbereich (SOA) betrieben.

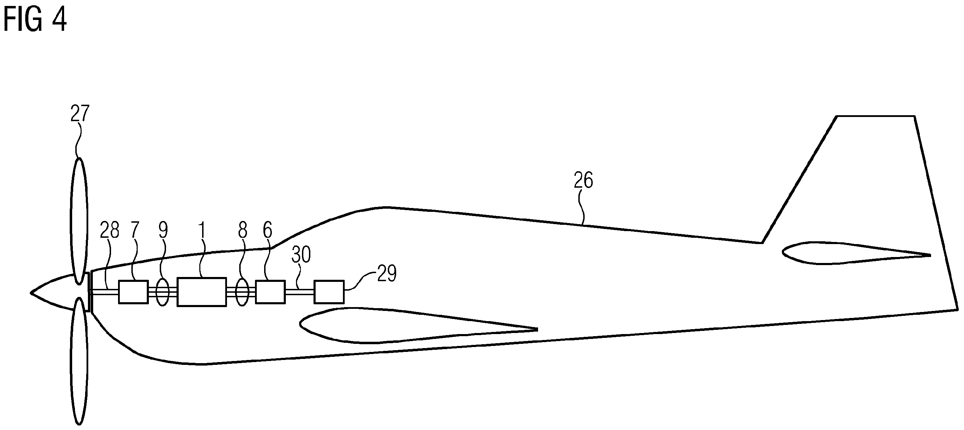

FIG 4 veranschaulicht, wie der Umrichter 1 beispielhaft in einem Flugzeug 26 bereitgestellt sein kann. FIG 4 zeigt ein Starrflügelflugzeug 26, bei welchem ein Propeller 27 durch den Verbraucher 7 angetrieben werden kann. Der Propeller 27 wird über eine Welle 28 durch den Verbraucher 7 rotiert. Der Verbraucher 7 ist in dem Beispiel ein elektrischer Antriebsmotor, also eine elektrische Maschine, die im Motorbetrieb betrieben wird. Die Energie für den Antrieb des Propellers 27 kann durch eine Brennkraftmaschine 29 gewonnen werden, bei der es sich beispielsweise um einen Ottomotor oder einen Dieselmotor handeln kann. Die Brennkraftmaschine 29 kann über eine Welle 30 die Spannungsquelle 6 antreiben, die hierzu als elektrischer Generator ausgestaltet ist. Als elektrischer Generator kann eine elektrische Maschine im Generatorbetrieb bereitgestellt sein. Eine Drehzahl der Welle 30 ist dabei unabhängig von einer Drehzahl der Welle 28. Hierzu wird die von der Spannungsquelle 6 erzeugte Wechselspannung in der beschriebenen Weise über den Umrichter 1 in Wechselspannung umgewandelt, die über die Wechselspannungs-Phasenleiter 9 in den Verbraucher 7 eingespeist werden kann. Eine Schaltfrequenz der Schalteranordnungen 18, 19 wird hierbei durch die Steuereinrichtung 5 in Abhängigkeit von einer Solldrehzahl des Propellers 27 eingestellt. Die Solldrehzahl kann hierbei beispielsweise durch einen Piloten mittels eines (nicht dargestellten) Bedienelements eingestellt oder vorgegeben werden.

Insgesamt zeigt das Beispiel, wie durch die Erfindung ein Verfahren für das Auslösen der Halbleiterschutzsicherungen in einem ePlane-Umrichter mit Sicherungen bereitgestellt werden kann.

## Patentansprüche

1. Verfahren zum Steuern eines Umrichters (1), wobei eine Plusleitung (12) und eine Minusleitung (13) eines Zwischenkreises (3) durch eine Halbbrücke (17) mit einer Low-Side-Schaltung und einer High-Side-Schaltung jeweils über mehrere Halbleiterschalter (20, 21, 23) mit einem Wechselspannungs-Phasenleiter (9) verschaltet sind, wobei jeder Halbleiterschalter (20, 21, 23) der Halbbrücke (17) jeweils eine eigene, in Reihe zur Schaltstrecke geschaltete Schmelzsicherung (22, 24) aufweist,
mit den Schritten:
- Detektieren eines defekten Halbleiterschalters (23) der Halbbrücke (17), der dauerhaft in einem elektrisch leitenden Zustand verharrt,
- Schrittweises Aufschmelzen der Schmelzsicherung (24) des defekten Halbleiterschalters (23) durch mehrmaliges miteinander Kurzschließen der Plusleitung (12) und der Minusleitung (13) über den defekten Halbleiterschalter (23) und mindestens zwei parallel geschaltete Halbleiterschalter (21) der Halbbrücke (17) für jeweils eine Pulszeitdauer (Tsoa), die kleiner ist als eine Schmelzzeitdauer (Ta), die die Schmelzsicherung bei durchgängigem Kurzschluss zum Aufschmelzen benötigt.

2. Verfahren nach Anspruch 1, wobei zwischen jedem Kurzschluss (25) eine Pulspause (Tp) vorgesehen wird, die kleiner als eine thermische Zeitkonstante der Schmelzsicherung (24) ist.

3. Verfahren nach einem der vorhergehenden Ansprüche, wobei der defekte Halbleiterschalter (23) mittels einer den defekten Halbleiterschalter (23) ansteuernden Treiberschaltung detektiert wird, indem die Treiberschaltung eine über dem defekten Halbleiterschalter (23) oder über einem der weiteren Halbleiterschalter (21) abfallende elektrische Spannung mit einem Spannungssollwert vergleicht.

4. Verfahren nach einem der vorhergehenden Ansprüche, wobei nach dem Aufschmelzen der Schmelzsicherung (24) ein Lichtbogen in der Schmelzsicherung (24) mittels der mindestens zwei weiteren Halbleiterschalter (21) unterdrückt wird.

5. Verfahren nach einem der vorhergehenden Ansprüche, wobei der defekte Halbleiterschalter (23) im Betrieb des Umrichters (1), während ein elektrischer Verbraucher (7) über den Umrichter (1) betrieben wird, detektiert wird, und zum Aufschmelzen der Sicherung (24) ein vorbestimmtes Pulsmuster aktiviert wird, mittels welchem die mindestens zwei weiteren Halbleiterschalter (21) angesteuert werden.

6. Verfahren nach einem der vorhergehenden Ansprüche, wobei der Umrichter (1) nach dem Aufschmelzen der Schmelzsicherung (24) mit dem defekten Halbleiterschalter (23) weiterbetrieben wird.

7. Verfahren nach einem der vorhergehenden Ansprüche, wobei die Pulszeitdauer (Tsoa) in einem Bereich von 8 Mikrosekunden bis 30 Mikrosekunden liegt.

8. Umrichter (1) mit
- einem Zwischenkreis (3) zum Bereitstellen einer Gleichspannung (S),
- mindestens einer Halbbrücke (17), mit einer Low-Side-Schaltung und einer High-Side-Schaltung, durch welche eine Plusleitung (12) und eine Minusleitung (13) des Zwischenkreises (3) jeweils über mehrere parallel geschaltete Halbleiterschalter (20,21) mit einem Wechselspannungs-Phasenleiter (9) verschaltet sind, wobei jeder Halbleiterschalter (20,21) jeweils eine eigene, in Reihe zur Schaltstrecke geschaltete Schmelzsicherung (22) aufweist,
**gekennzeichnet durch**
eine Steuereinrichtung (5) zum Steuern der Halbleiterschalter (20,21), wobei die Steuereinrichtung (5) dazu ausgelegt ist, ein Verfahren nach einem der vorhergehenden Ansprüche durchzuführen.

9. Umrichter (1) nach Anspruch 8, wobei jeder Halbleiterschalter (20,21) jeweils durch einen IGBT oder einen MOSFET gebildet ist.

10. Flugzeug (26), insbesondere Starrflügelflugzeug, mit mindestens einem elektrischen Antriebsmotor (7) zum Antreiben eines jeweiligen Propellers (27) des Flugzeugs (26), wobei der mindestens eine Antriebsmotor (7) über einen Umrichter (1) nach einem der Ansprüche 8 oder 9 mit einem elektrischen Generator (6) gekoppelt ist.

## Claims

1. Method for controlling a converter (1), wherein a positive line (12) and a negative line (13) of an intermediate circuit (3) are respectively connected by means of a half-bridge (17) having a low-side circuit and a high-side circuit to an alternating voltage phase conductor (9) via a plurality of semiconductor switches (20, 21, 23), wherein each semiconductor switch (20, 21, 23) of the half-bridge (17) has its own dedicated fuse (22, 24), connected in series with the circuit path, comprising the following steps:
- detection of a defective semiconductor switch (23) of the half-bridge (17), which is permanently blocked in an electrically conductive state;
- incremental melting of the fuse (24) of the defective semiconductor switch (23), by means of the repeated sequential short-circuiting of the positive line (12) and the negative line (13) via the defective semiconductor switch (23) and at least two parallel-connected semiconductor switches (21) of the half-bridge (17) for a respective pulse duration (Tsoa) which is shorter than a melting duration (Ta) required by the fuse in order to melt in the event of a continuous short-circuit.

2. Method according to Claim 1, wherein a pulse pause (Tp) is provided between each short-circuit (25), which is shorter than a thermal time constant of the fuse (24).

3. Method according to one of the preceding claims, wherein the defective semiconductor switch (23) is detected by means of a driver circuit which controls the defective semiconductor switch (23), wherein the driver circuit compares an electrical voltage drop across the defective semiconductor switch (23), or across one of the further semiconductor switches (21), with a target voltage value.

4. Method according to one of the preceding claims, wherein, further to the melting of the fuse (24), an arc in the fuse (24) is suppressed by the at least two further semiconductor switches (21).

5. Method according to one of the preceding claims, wherein the defective semiconductor switch (23) is detected with the converter (1) in-service, during the operation of an electrical load (7) by means of the converter (1) and, for the melting of the fuse (24), a predefined pulse pattern is activated, by means of which the at least two further semiconductor switches (21) are actuated.

6. Method according to one of the preceding claims, wherein the converter (1), further to the melting of the fuse (24), continues to operate with the defective semiconductor switch (23) .

7. Method according to one of the preceding claims, wherein the pulse duration (Tsoa) lies within a range of 8 microseconds to 30 microseconds.

8. Converter (1), having
- an intermediate circuit (3) for the delivery of a DC voltage (S),
- at least one half-bridge (17),having a low-side circuit and a high-side circuit, by means of which a positive line (12) and a negative line (13) of the intermediate circuit (3) are respectively connected to an alternating voltage phase conductor (9) via a plurality of parallel-connected semiconductor switches (20, 21), wherein each semiconductor switch (20, 21) has its own dedicated fuse (22), connected in series with the circuit path,
**characterized by**
a control apparatus (5) for the control of the semiconductor switches (20, 21), wherein the control apparatus (5) is designed for the execution of a method according to one of the preceding claims.

9. Converter (1) according to Claim 8, wherein each semiconductor switch (20, 21) is respectively constituted as an IGBT or a MOSFET.

10. Aircraft (26), specifically fixed-wing aircraft, having at least one electric drive motor (7) for driving a respective propeller (27) of the aircraft (26), wherein the at least one drive motor (7) is coupled to an electric generator (6) via a converter (1) according to one of Claims 8 or 9.

## Revendications

1. Procédé de commande d'un onduleur (1) dans lequel, une ligne (12) plus et une ligne (13) moins d'un circuit (3) intermédiaire sont connectées à un conducteur (9) de phase de tension alternative par un demi-pont (17), ayant un circuit low-side et un circuit hight-side, respectivement par l'intermédiaire de plusieurs interrupteurs (20, 21, 23) à semi-conducteur, chaque interrupteur (20, 21, 23) à semi-conducteur du demi-pont (17) ayant respectivement son propre fusible (22, 24) monté en série avec la section d'interruption, comprenant les stades :
- détection d'un interrupteur (23) à semi-conducteur défectueux du demi-pont (17), qui reste en permanence dans un état conducteur de l'électricité,
- fusion pas-à-pas du fusible (24) de l'interrupteur (23) à semi-conducteur défectueux, en court-circuitant plusieurs fois entre elles la ligne (12) plus et la ligne (13) moins, par l'intermédiaire de l'interrupteur (23) à semi-conducteur défectueux et d'au moins deux interrupteurs (21) à semi-conducteur, montés en parallèle, du demi-pont (17) pour respectivement une durée (Tsoa) d'impulsion, qui est plus petite qu'une durée (Ta) de fusion, dont le fusible a besoin pour fondre lors d'un court-circuit courant.

2. Procédé suivant la revendication 1, dans lequel on prévoit, entre chaque court-circuit (25), un intervalle (Tp) entre les impulsions, qui est plus petit qu'une constante de temps thermique du fusible (24).

3. Procédé suivant l'une des revendications précédentes, dans lequel on détecte l'interrupteur (23) à semi-conducteur défectueux au moyen d'un circuit d'attaque, commandant l'interrupteur (23) à semi-conducteur défectueux, par le fait que le circuit d'attaque compare, à une valeur de consigne de tension, une tension électrique chutant aux bornes de l'interrupteur (23) à semi-conducteur défectueux ou aux bornes de l'un des autres interrupteurs (21) à semi-conducteur.

4. Procédé suivant l'une des revendications précédentes, dans lequel, après la fusion du fusible (24), on supprime un arc électrique dans le fusible (24) au moyen des au moins deux autres interrupteurs (21) à semi-conducteur.

5. Procédé suivant l'une des revendications précédentes, dans lequel on détecte l'interrupteur (23) à semi-conducteur défectueux, alors que l'onduleur (1) fonctionne, pendant que l'on fait fonctionner un consommateur (7) électrique par l'intermédiaire de l'onduleur (1), et, pour faire fondre le fusible (24), on active un motif d'impulsion déterminé à l'avance, au moyen duquel on commande les au moins deux autres interrupteurs (21) à semi-conducteur.

6. Procédé suivant l'une des revendications précédentes, dans lequel on continue à faire fonctionner l'onduleur (1) après la fusion du fusible (24) avec l'interrupteur (23) à semi-conducteur défectueux.

7. Procédé suivant l'une des revendications précédentes, dans lequel la durée (Tsoa) d'impulsion est dans une plage allant de 8 microsecondes à 30 microsecondes.

8. Onduleur (1) comprenant
- un circuit (3) intermédiaire pour disposer d'une tension (S) continue,
- au moins un demi-pont (17) ayant un circuit low-side et un circuit high-side, par lesquels une ligne (12) plus et une ligne (13) moins du circuit (3) intermédiaire sont reliées à un conducteur (9) de phase de tension alternative, respectivement, par l'intermédiaire de plusieurs interrupteurs (20, 21) à semi-conducteur montés en parallèle, chaque interrupteur (20, 21) à semi-conducteur ayant, respectivement, son propre fusible (22) monté en série avec la section d'interruption,
**caractérisé par**
un dispositif (5) de commande pour commander les interrupteurs (20, 21) à semi-conducteur, le dispositif (5) de commande étant conçu pour effectuer un procédé suivant l'une des revendications précédentes.

9. Onduleur (1) suivant la revendication 8, dans lequel chaque interrupteur (20, 21) à semi-conducteur est formé respectivement par un IGBT ou par un MOFSET.

10. Avion (26), notamment avion à voilure fixe, comprenant au moins un moteur (7) électrique d'entraînement pour entraîner une hélice (27) respective de l'avion (26), le au moins un moteur (7) d'entraînement étant relié à une génératrice (6) électrique par un onduleur (1) suivant l'une des revendications 8 ou 9.
